# EUROPEAN PATENT APPLICATION

(11) **EP 3 886 289 A1**
(43) Date of publication of application: **29.09.2021**
(21) Application number: 20164876.3
(22) Date of filing: 23.03.2020
(51) Int. Cl.: H02J 7/00, H01F 38/14, H01H 53/00, H02J 50/00, H02J 50/10, H02K 35/02, H04R 25/00

(54) **HEARING DEVICE**

(71) Applicant: Sonova AG, 8712 Stäfa (CH)
(72) Inventor: PROBST, Daniel, 8713 Uerikon (CH); AAZAMI, Sahba, 1297 Founex (CH); BRÄNDLE, Bruno, 9630 Wattwil (CH); KIM, Jaewoo, Waterloo, Ontario N2T 2T6 (CA)
(74) Representative: Liedtke & Partner Patentanwälte

(57) **Abstract**

The invention relates to a hearing device (10) comprising:
- a rechargeable battery (11) configured to power the hearing device (10),
- a charging circuit (12) configured to receive wireless power to charge the battery (11), wherein the charging circuit (12) comprises a charging coil (3),
- a switch,
wherein the charging coil (3) is at least partially wrapped around at least part of the switch and/or integrated with the switch.

## Description

### Technical Field

The invention relates to a hearing device.

### Background of the Invention

In a confined space, such as the volume of a hearing instrument, the requirements for additional features will always pose a challenge to the housing designer. In the case of a custom made In-The-Ear hearing aid (ITE), the fit rate is severely compromised by additional components or the increase in an existing component size.

The addition of wireless charging functionality is a desired feature, that brings about increased reliability and ease of use. In this case the requirement for an additional charging coil is one of the challenging conditions which has to be resolved in order to minimize the adverse impact of required additional components on functional aspects such as reliability and fit rate.

### Summary of the Invention

It is an object of the present invention to provide an improved hearing device.

The object is achieved by a hearing device according to claim 1.

Preferred embodiments of the invention are given in the dependent claims.

A hearing device according to the invention comprises:
- a rechargeable battery configured to power the hearing device,
- a charging circuit configured to receive wireless power to charge the battery, wherein the charging circuit comprises a charging coil,
- a switch,
wherein the charging coil is at least partially wrapped around at least part of the switch and/or arranged in proximity to the switch and/or integrated with the switch.

Integrating a charging coil with a switch saves space in the hearing device and hence provides a solution for implementing charging and switching functionality in a small rechargeable system, offering in turn a reliable, cost effective and easy to use device, further offering potential improvement in final product quality and safety.

In an exemplary embodiment, a magnetic or magnetisable core is arranged at least partially within the charging coil or in proximity to the charging coil. The charging coil is considered to be in proximity to the core if changes of the magnetic field of the core, e.g. due to movement of the core, induce a voltage in the coil which can be picked up by circuitry to be used as information for switching.

In an exemplary embodiment, the magnetic or magnetisable core is in a fixed position relative to the charging coil.

In an exemplary embodiment, the magnetic or magnetisable core is movable within the charging coil, e.g. in a longitudinal or axial direction.

In an exemplary embodiment, the switch comprises at least one pair of electrical contacts and a handle configured to connect or disconnect the contacts when operated, wherein the magnetisable core is part of the handle.

In an exemplary embodiment, the switch comprises circuitry connected to the charging coil and configured to detect a pattern of a voltage induced in the charging coil when the magnetic core is moved within the charging coil.

In an exemplary embodiment, the switch comprises:
- a handle in the form of a movable magnet configured to rest at a distance to the magnetisable core in one state and to contact the magnetisable core when being moved into another state,
- circuitry connected to the charging coil and configured to detect a pattern of a voltage induced in the charging coil when the movable magnet contacts the magnetisable core.

In an exemplary embodiment, the circuitry comprises an operational amplifier and/or a comparator.

In an exemplary embodiment, the circuitry is powered by the battery when the hearing device is in a standby mode and the circuitry is configured to change an operation mode of the hearing device upon operation of the switch.

In an exemplary embodiment, the magnetisable core is a ferrite core.

In an exemplary embodiment, the hearing device further comprises a coil body carrying the charging coil, the coil body consisting of a non-magnetic and/or ferrimagnetic material.

In an exemplary embodiment, the charging coil and/or the coil body has a basically cylindrical, cuboid or flat spiral form.

In an exemplary embodiment, the flat spiral charging coil is implemented as a track on a printed circuit board.

In an exemplary embodiment, the hearing device is configured as a hearing aid.

In a method of operating a hearing device as described above, the charging coil is used:
- to receive wireless power to charge a rechargeable battery of the hearing device, and
- as a switch or part thereof to change a state or mode of the hearing device. These two functions do not necessarily have to be performed at the same time or in a specific order.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitive of the present invention, and wherein:
- Figure 1: is a schematic view of an exemplary embodiment of a switch arrangement,
- Figure 2: is a schematic view of another exemplary embodiment of a switch arrangement,
- Figure 3: is a schematic view of yet another exemplary embodiment of a switch arrangement having a comparator,
- Figure 4: is a schematic diagram showing an output signal of the comparator,
- Figure 5: is a schematic view of another exemplary embodiment of a switch arrangement having a comparator,
- Figure 6: is a schematic diagram showing an output signal of the comparator,
- Figure 7: is a schematic view of another exemplary embodiment of a switch arrangement,
- Figure 8: is a schematic view of yet another exemplary embodiment of a switch arrangement, and
- Figure 9: is a schematic view of a hearing device.

Corresponding parts are marked with the same reference symbols in all figures.

### Detailed Description of Preferred Embodiments

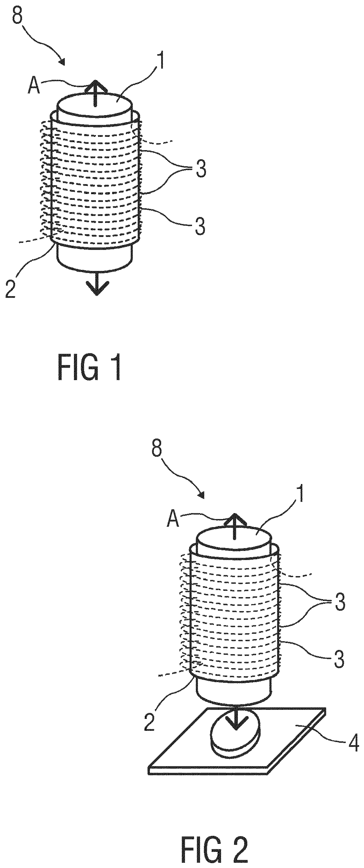

**Figure 1** is a schematic view of an exemplary embodiment of a switch arrangement 8 comprising a magnetic or magnetisable core 1, in particular a ferrite core, arranged within a coil body 2 which is part of a switch, and a charging coil 3 wrapped around the coil body 2 or integrated within the coil body 2.

The switch can be in the form of a monostable push button or a bistable on/off type switch.

In an exemplary embodiment, the position of the coil 3 may be static. The core 1 may be movable within the coil body 2 and charging coil 3, in particular in an axial direction A.

In an exemplary embodiment, the coil body 2 is cylindrical with a circular or rectangular cross section, and is primarily used for forming the charging coil 3. The coil body 2 may be made from a non-magnetic material in order to minimize adverse effects on the magnetic properties of the system. In other exemplary embodiments, the coil body 2 may also be made from a ferrimagnetic material.

The core 1 may be used as an actuator of the switch and can be made from a ferrimagnetic material such as a ferrite, in order to increase the electromagnetic performance of the structure. The core 1 is free to move/slide inside the coil body 2 and charging coil 3.

The invention provides a space efficient configuration of a charging coil 3 wrapped around or integrated with a switch.

**Figure 2** is a schematic view of an exemplary embodiment of a switch arrangement 8 comprising a magnetic or magnetisable core 1, in particular a ferrite core, arranged within a coil body 2 which is part of a switch, and a charging coil 3 wrapped around the coil body 2 or integrated within the coil body 2, wherein the core 1 works as an actuator or handle or part thereof for pushing onto at least one pair of electrical contacts 4 so as to connect or disconnect the contacts 4 when operated.

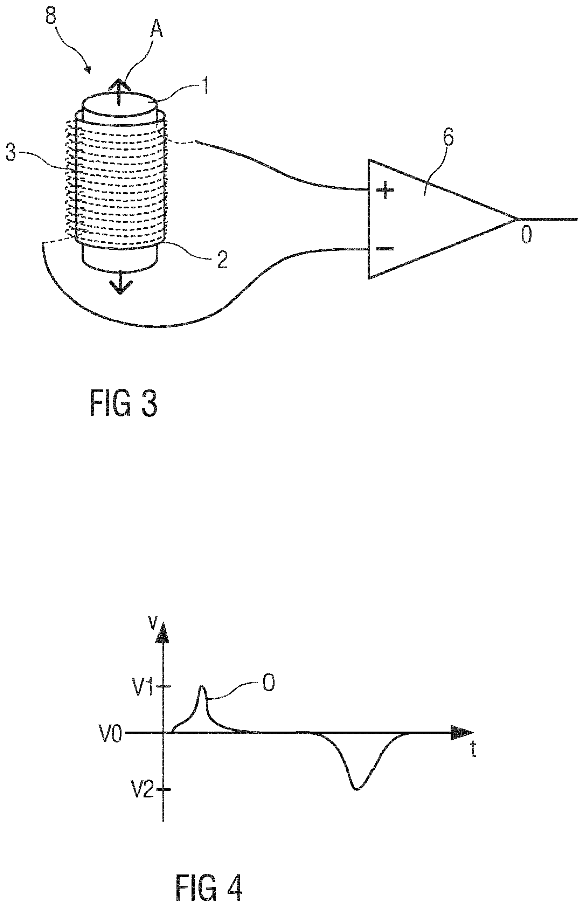

**Figure 3** is a schematic view of an exemplary embodiment of a switch arrangement 8 comprising a magnetic or magnetisable core 1, in particular a ferrite core, arranged within a coil body 2 which is part of a switch, and a charging coil 3 wrapped around the coil body 2 or integrated within the coil body 2. In this case the core 1 or actuator can be made from a magnetic material, such as a neodymium magnet. The movement of the core 1 inside the stationary charging coil 3 induces a voltage according to Faraday's law in the charging coil 3. The switch comprises circuitry electrically connected to the charging coil 3 and configured to detect a pattern of a voltage induced in the charging coil 3 when the magnetic core 1 is moved within the charging coil 3. The circuitry may comprise an operational amplifier and/or a comparator 6, in particular an operational amplifier may be configured as a comparator 6. The comparator 6 may provide an output signal O, for example as shown in the voltage V over time t diagram of **figure 4****,** wherein the output signal O is indicative of whether the core 1 is moved in the axial direction A by assuming a voltage value VI, or whether the core 1 is moved in the opposite direction by assuming a voltage value V2, or whether the core 1 is at rest by assuming a voltage level V0.

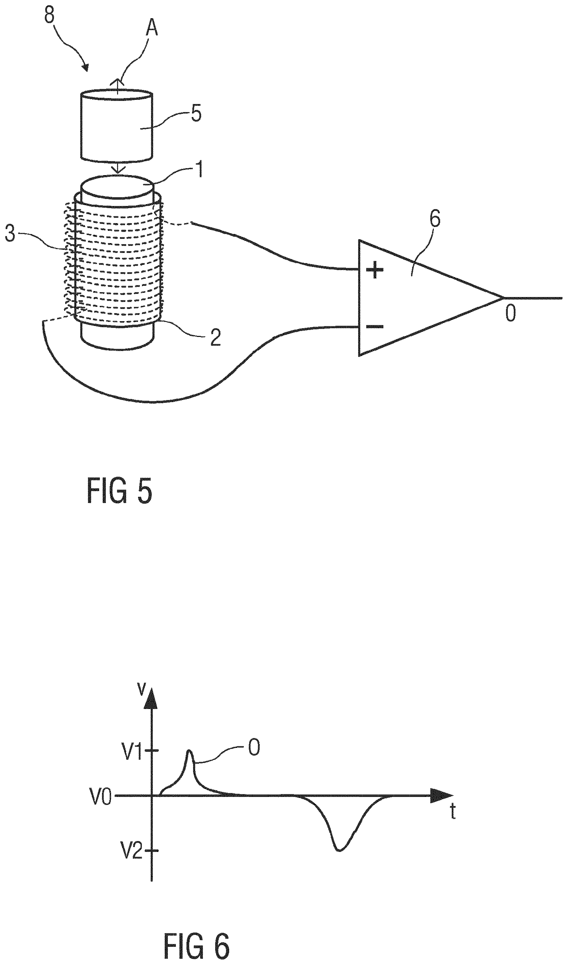

**Figure 5** is a schematic view of an exemplary embodiment of a switch arrangement 8 comprising a magnetic or magnetisable core 1, in particular a ferrite core, arranged within a coil body 2 which is part of a switch, and a charging coil 3 wrapped around the coil body 2 or integrated within the coil body 2. In this case the core 1 or actuator can be made from a ferrite material and be static in position within the coil 3. An external magnet 5 is movable arranged and serves as an actuator or handle of the switch. The movable magnet 5 may be configured to rest at a distance to the magnetisable core 1 in one state and to contact the magnetisable core 1 when being moved into another state.

The movement of the magnet 5 relative to the core 1 induces a voltage according to Faraday's law in the charging coil 3. The switch comprises circuitry electrically connected to the charging coil 3 and configured to detect a pattern of a voltage induced in the charging coil 3 when the magnetic core 1 is moved within the charging coil 3. The circuitry may comprise an operational amplifier and/or a comparator 6, in particular an operational amplifier may be wired as a comparator 6. The comparator 6 may provide an output signal O, for example as shown in the voltage V over time t diagram of **figure 6****,** wherein the output signal O is indicative of whether the core 1 is moved in the axial direction A by assuming a voltage value VI, or whether the core 1 is moved in the opposite direction by assuming a voltage value V2, or whether the core 1 is at rest by assuming a voltage level V0.

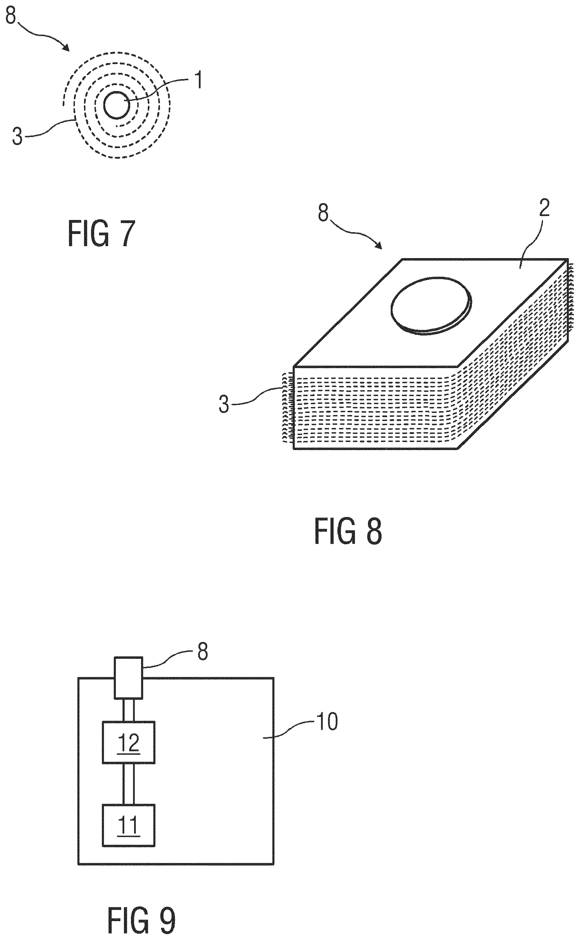

**Figure 7** is a schematic view of another exemplary embodiment of a switch arrangement 8 comprising a charging coil 3, wherein the charging coil 3 has a basically flat spiral form, e.g. by being implemented as a track on a printed circuit board.

In this configuration an optional central hole in the printed circuit board facilitates the use of a ferrimagnetic core 1 as described above, either as an actuator, or as an electromagnetic signal producer.

**Figure 8** is a schematic view of an exemplary embodiment of a switch arrangement 8 comprising a charging coil 3 placed around the coil body 2 also serving as a body of the switch. In this case if the coil body 2 is made from a magnetic material, such as steel, appropriate isolation may be required to minimize adverse effects of such material on the system performance.

The charging coil 3 and/or the coil body 2 has a basically cuboid form but may likewise have a different form.

**Figure 9** is a schematic view of a hearing device 10.

The embodiments of switch arrangements 8 shown above may be applied in a hearing device 10, further comprising:
- a rechargeable battery 11 configured to power the hearing device 10,
- a charging circuit 12 configured to receive wireless power to charge the battery 11, wherein the charging circuit 12 comprises the charging coil 3.

In an exemplary embodiment, the circuitry is powered by the battery 11 when the hearing device 10 is in a standby mode and the circuitry is configured to change an operation mode of the hearing device 10 upon operation of the switch.

In an exemplary embodiment, the hearing device 10 can be configured as a hearing aid.

The switch arrangement 8 integrating a charging coil 3 with a switch saves space in the hearing device 10 and hence provides a solution for implementing charging and switching functionality in a small rechargeable system, offering in turn a reliable, cost effective and easy to use device, further offering potential improvement in final product quality and safety.

### List of References

- 1: core
- 2: coil body
- 3: coil
- 4: contacts
- 5: magnet
- 6: comparator
- 8: switch arrangement
- 10: hearing device
- 11: rechargeable battery
- 12: charging circuit
- A: axial direction
- O: output signal
- t: time
- V: voltage
- V0, V1, V2: voltage value

## Claims

1. A hearing device (10) comprising:
- a rechargeable battery (11) configured to power the hearing device (10),
- a charging circuit (12) configured to receive wireless power to charge the battery (11), wherein the charging circuit (12) comprises a charging coil (3),
- a switch,
wherein the charging coil (3) is at least partially wrapped around at least part of the switch or in proximity to the switch.

2. The hearing device (10) of claim 1,
wherein a magnetic or magnetisable core (1) is arranged at least partially within the charging coil (3).

3. The hearing (10) device of claim 2, wherein the magnetic or magnetisable core (1) is in a fixed position relative to the charging coil (3).

4. The hearing device (10) of claim 2, wherein the magnetic or magnetisable core (1) is movable within the charging coil (3).

5. The hearing device (10) of claim 4, wherein the switch comprises at least one pair of electrical contacts (4) and a handle configured to connect or disconnect the contacts (4) when operated, wherein the magnetisable core (1) is part of the handle.

6. The hearing device (10) of claim 4, wherein the switch comprises circuitry connected to the charging coil (3) and configured to detect a pattern of a voltage (V) induced in the charging coil (3) when the magnetic core (1) is moved within the charging coil (3).

7. The hearing device (10) of claim 3, wherein the switch comprises:
- a handle in the form of a movable magnet (5) configured to rest at a distance to the magnetisable core (1) in one state and to contact the magnetisable core (1) when being moved into another state,
- circuitry connected to the charging coil (3) and configured to detect a pattern of a voltage (V) induced in the charging coil (3) when the movable magnet (5) contacts the magnetisable core (1).

8. The hearing device (10) according to any one of the preceding claims, wherein the circuitry comprises an operational amplifier and/or a comparator (6).

9. The hearing device (10) according to any one of claims 6 to 8, wherein the circuitry is powered by the battery (11) when the hearing device (10) is in a standby mode and the circuitry is configured to change an operation mode of the hearing device (10) upon operation of the switch.

10. The hearing device (10) according to any one of the claims 2 to 5 and 7 to 9, wherein the magnetisable core (1) is a ferrite core.

11. The hearing device (10) according to any one of the preceding claims, further comprising a coil body (2) carrying the charging coil (3), the coil body (2) consisting of a non-magnetic and/or ferrimagnetic material.

12. The hearing device (10) according to any one of the preceding claims, wherein the charging coil (3) and/or the coil body (2) has a basically cylindrical, cuboid or flat spiral form.

13. The hearing device (10) according to claim 11, wherein the flat spiral charging coil (3) is implemented as a track on a printed circuit board.

14. The hearing device (10) according to any one of the preceding claims, configured as a hearing aid.

15. A method of operating a hearing device (10) according to any one of the preceding claims, wherein the charging coil (3) is used:
- to receive wireless power to charge the rechargeable battery (11) of the hearing device (10), and
- as a switch or part thereof to change a state or mode of the hearing device (10).

## Amended claims

### Amended claims in accordance with Rule 137(2) EPC.

1. A hearing device (10) comprising:
- a rechargeable battery (11) configured to power the hearing device (10),
- a charging circuit (12) configured to receive wireless power to charge the battery (11), wherein the charging circuit (12) comprises a charging coil (3),
- a switch,
wherein the charging coil (3) is at least partially wrapped around at least part of the switch.

2. The hearing device (10) of claim 1,
wherein a magnetic or magnetisable core (1) is arranged at least partially within the charging coil (3).

3. The hearing (10) device of claim 2, wherein the magnetic or magnetisable core (1) is in a fixed position relative to the charging coil (3).

4. The hearing device (10) of claim 2, wherein the magnetic or magnetisable core (1) is movable within the charging coil (3).

5. The hearing device (10) of claim 4, wherein the switch comprises at least one pair of electrical contacts (4) and a handle configured to connect or disconnect the contacts (4) when operated, wherein the magnetisable core (1) is part of the handle.

6. The hearing device (10) of claim 4, wherein the switch comprises circuitry connected to the charging coil (3) and configured to detect a pattern of a voltage (V) induced in the charging coil (3) when the magnetic core (1) is moved within the charging coil (3).

7. The hearing device (10) of claim 3, wherein the switch comprises:
- a handle in the form of a movable magnet (5) configured to rest at a distance to the magnetisable core (1) in one state and to contact the magnetisable core (1) when being moved into another state,
- circuitry connected to the charging coil (3) and configured to detect a pattern of a voltage (V) induced in the charging coil (3) when the movable magnet (5) contacts the magnetisable core (1).

8. The hearing device (10) according to any one of the preceding claims, wherein the circuitry comprises an operational amplifier and/or a comparator (6).

9. The hearing device (10) according to any one of claims 6 to 8, wherein the circuitry is powered by the battery (11) when the hearing device (10) is in a standby mode and the circuitry is configured to change an operation mode of the hearing device (10) upon operation of the switch.

10. The hearing device (10) according to any one of the claims 2 to 5 and 7 to 9, wherein the magnetisable core (1) is a ferrite core.

11. The hearing device (10) according to any one of the preceding claims, further comprising a coil body (2) carrying the charging coil (3), the coil body (2) consisting of a non-magnetic and/or ferrimagnetic material.

12. The hearing device (10) according to any one of the preceding claims, wherein the charging coil (3) and/or the coil body (2) has a basically cylindrical, cuboid or flat spiral form.

13. The hearing device (10) according to claim 12, wherein the flat spiral charging coil (3) is implemented as a track on a printed circuit board.

14. The hearing device (10) according to any one of the preceding claims, configured as a hearing aid.

15. A method of operating a hearing device (10) according to any one of the preceding claims, wherein the charging coil (3) is used:
- to receive wireless power to charge the rechargeable battery (11) of the hearing device (10), and
- as a switch or part thereof to change a state or mode of the hearing device (10).
